# EUROPÄISCHE PATENTSCHRIFT

(11) **EP 1 378 499 B1**
(45) Veröffentlichungstag und Bekanntmachung des Hinweises auf die Patenterteilung: **04.06.2014**
(21) Anmeldenummer: 03014205.3
(22) Anmeldetag: 25.06.2003
(51) Int. Cl.: C05G 3/08

(54) **Bewässerungsdüngung von landwirtschaftlich oder gärtnerisch genutzten Substraten**
Fertilizer for irrigation of agricultural or garden substrates
Engrais pour l'irrigation des substrats agricoles ou des jardins

(30) Priorität: 06.07.2002 DE 10230593
(43) Veröffentlichungstag der Anmeldung: 07.01.2004
(73) Patentinhaber: COMPO Expert GmbH, 48157 Münster (DE)
(72) Erfinder: Horchler, Klaus, Dr., 67117 Limburgerhof (DE); Hähndel, Reinhardt, Dr., 67117 Limburgerhof (DE); Zerulla, Wolfram, Dr., 67487 St. Martin (DE)
(74) Vertreter: Hollah, Dorothee

(56) Entgegenhaltungen:
- EP-A1- 0 529 473
- DD-A- 292 649
- DE-A- 19 631 764
- DE-C1- 10 164 104
- US-A- 4 551 167
- US-A- 4 975 107
- DATABASE BIOSIS [Online] BIOSCIENCES INFORMATION SERVICE, PHILADELPHIA, PA, US; 1988 RECHCIGL J E ET AL: "AMMONIUM FIXATION FROM UREA AS INFLUENCED BY NITRAPYRIN" Database accession no. PREV198886098493 XP002249207 & COMMUNICATIONS IN SOIL SCIENCE AND PLANT ANALYSIS, Bd. 19, Nr. 14, 1988, Seiten 1583-1592, ISSN: 0010-3624
- DATABASE WPI Section Ch, Week 200159 Derwent Publications Ltd., London, GB; Class C04, AN 2001-530402 XP002249208 & CN 1 299 794 A (SHENYANG LUGU ECOLOGICAL FERTILIZER CO L), 20. Juni 2001 (2001-06-20)
- BARTH S. ET AL: "Influenze of soil parameters on the effect of 3,4-dimethylpyrazole-phosphate as a nitrification inhibitor", BIOL FERTIL SOILS, no. 34, 2001, pages 98-102, XP008115432,
- WEISKE A. ET AL: "einfluss des neuen heterozyklischen Nitrifikationsinhibitors 3,4 dimethylpyrazol phosphat im Vergelich zu Dicyandiamid auf die N2O Emissionen und Methanoxidation vom Boden nach mehrjäriger Applikation in Feldversuchen.", VDLUFA, no. 52, 1999, pages 517-520, XP008115430, ISSN: 0173-8712

## Beschreibung

Die Erfindung betrifft ein Verfahren zur Bewässerungsdüngung von landwirtschaftlich oder gärtnerisch genutzten Substraten sowie die Verwendung von Nitrifikationsinhibitoren in Kombination mit stickstoffhaltigen Düngemitteln.

Kulturpflanzen benötigen fast immer eine Stickstoffdüngung, um rentable Erträge zu liefern. Die Mineraldüngung erfolgt meist mit Kalkammonsalpeter, Ammonsulfatsalpeter, Ammoniumnitrat, Ammoniumsulfat, Harnstoff oder stickstoffhaltigen Mehrnährstoffdüngern. Allerdings kann die Pflanze den ausgebrachten Stickstoff nicht vollständig nutzen, da ein Teil hiervon durch die Niederschläge als Nitrat in tiefere, für die Wurzeln nicht erreichbare Bodenschichten ausgewaschen wird, was zu einer Nitratanreicherung im Grundwasser führen kann. Der Zusatz eines Nitrifikationsinhibitors, zum Beispiel Dicyandiamid oder Dimethylpyrazolphosphat bewirkt, daß in den genannten Düngemitteln enthaltenes Ammonium über mehrere Wochen im Boden stabil bleibt und nicht, wie normalerweise üblich, innerhalb von wenigen Tagen von Bodenorganismen in auswaschungsgefährdetes Nitrat umgewandelt wird.

Die gleichfalls beobachtete Reduktion der Emission gasförmiger Stickstoffverbindungen nach Zusatz von Nitrifikationsinhibitoren ist zwar ökologisch bedeutsam, spielt jedoch mengenmäßig für die Pflanzenernährung eine untergeordnete Rolle.

Die Reduzierung der Stickstoffverluste und Verbesserung der Effizienz der Stickstoffdüngung infolge der Verwendung von Düngern mit Nitrifikationsinhibitoren ist für verschiedene Kulturen vielfach beschrieben, siehe beispielsweise Bio. Fert. Soils 34, Seiten 85 bis 97 (2001).

In der US 6,139,596 ist die Verwendung von Pyrazolverbindungen wie Dimethylpyrazol oder deren Salzen als Nitrifikationsinhibitor beschrieben. Die Nitrifikationsinhibitoren werden in der Regel auf ein Düngemitteln aufgebracht oder in ein Düngemittel eingebracht, mit dem sodann der Boden behandelt wird. Es ist auch angegeben, daß die Nitrifikationsinhibitoren zur Stabilisierung von Gülle oder flüssigen Düngerformulierungen wie Ammoniumnitrat-Harnstoff-Lösungen oder flüssigem Ammoniak verwendet werden können.

DE-A-196 31 764 betrifft neue Nitrifikationsinhibitoren sowie die Verwendung von Polysäuren zur Behandlung von Mineraldüngemitteln, die einen Nitrifikationsinhibitor enthalten.

Unter anderem wird 3,4-Dimethylpyrazolphosphat als Nitrifikationsinhibitor beschrieben. Sie werden zur Behandlung von Mineraldüngemitteln eingesetzt, können aber auch zur Stabilisierung von Gülle oder flüssigen Düngerformulierungen verwendet werden. Der Nitrifikationsinhibitor verhindert die mikrobielle Umsetzung von Ammoniumverbindungen zu Nitrat im Boden.

Der Intensivanbau von Obst und Gemüse erfolgt oft unter Verwendung von Tropfbewässerungssystemen, besonders in wasserarmen Regionen und im geschützten Anbau unter Glas oder Folie. Mit solchen Systemen wird das Wasser sehr sparsam mit einem Tropferschlauch längs der Pflanzreihe ausgebracht. Die Pflanzen erhalten nur die Menge an Wasser, die sie für ein optimales Wachstum benötigen, so daß kein Überschußwasser entsteht. Mit Hilfe der Tropfbewässerung kann auch eine gezielte Zufuhr an Nährstoffen erfolgen, indem wasserlösliche Nährsalze dem Bewässerungswasser zugegeben werden (Fertigation). Mangels einer vertikalen Wasserbewegung im Boden unterhalb der Durchwurzelungszone treten Nährstoffauswaschungsverluste praktisch nicht auf.

Der Einsatz von Nitrifikationsinhibitoren zum Zwecke der Verminderung der Auswaschungsverluste im Tropfbewässerungssystem ist daher an sich nicht angebracht. Erfindungsgemäße Versuche mit einem Zusatz von Nitrifikationsinhibitoren zur Fertigation zeigten jedoch wider Erwarten eine positive Wirkung auf Wachstum und Ertrag verschiedener Kulturen.

Aufgabe der vorliegenden Erfindung ist die Verbesserung des Wachstums und Ertrags bei Kulturen, die in Substraten derart angebaut werden, daß bei einer künstlichen Bewässerung kein Überschußwasser anfällt. Insbesondere sollen Wachstum und Ertrag bei Kulturen mit Tropfbewässerungssystemen verbessert werden.

Die Aufgabe wird erfindungsgemäß gelöst durch ein Verfahren zur Verbesserung des Wachstums und Ertrags bei der Düngung von landwirtschaftlich oder gärtnerisch genutzen Substraten zum Anbau von Obst- oder Gemüsekulturen im geschützten Anbau unter Glas oder Folie mit Tropfbewässerungssystemen, dadurch gekennzeichnet, dass bei der künstlichen Bewässerung ohne Anfall von Überschusswasser der Nitrifikationsinhibitor 3,4-Dimethylpyrazolphosphat mit stickstoffhaltigen Düngemitteln kombiniert dem Bewässerungswasser zugegeben wird und in in Wasser gelöster Form auf die Substrate aufgebracht oder eingebracht wird.

Die Aufgabe wird ferner gelöst durch die Verwendung des Nitrifikationsinhibitors 3,4-Dimethylpyrazolphosphat in Kombination mit stickstoffhaltigen Düngemitteln, dem Bewässerungswasser zugegeben, in in Wasser gelöster Form zur Düngung von landwirtschaftlich oder gärtnerisch genutzten Substraten bei der Tropfbewässerung, bei der kein Überschusswasser anfällt, zur Verbesserung des Wachstums und Ertrags.

Es wurde erfindungsgemäß gefunden, daß sich Wachstum und Ertrag in Kulturen, die künstlich bewässert werden, wobei kein Überschußwasser anfällt, deutlich erhöhen lassen, wenn zusätzlich zu stickstoffhaltigen Düngemitteln Nitrifikationsinhibitoren eingesetzt werden.

Unter landwirtschaftlich oder gärtnerisch genutzten Substraten werden dabei Substrate verstanden, in denen Pflanzenkulturen wurzeln. Es kann sich dabei beispielsweise um Ackerboden oder sonstigen landwirtschaftlich nutzbaren Erdboden oder auch um Substrate von Topf- oder Containerkulturen handeln. Als Substrate können aber auch von Ackerboden oder Erdboden unterschiedliche Systeme eingesetzt werden, sofern sie den Anbau von Kulturpflanzen erlauben. Beispielsweise kann es sich um Schüttungen von Kugeln, Splitt oder Granulaten handeln, in denen Kulturpflanzen wurzeln können, wie sie beispielsweise aus der Hydrokultur bekannt sind. Es kann sich damit um natürliche und künstlich hergestellte Materialien handeln, die die Ausbildung eines Wurzelwerks von Kulturpflanzen im Material erlauben und einen Wasser- und Nährstofftransport zulassen. Geeignete Substrate sind dem Fachmann bekannt, wobei auch aufbereitete Böden wie Torf und Blumenerde eingeschlossen sind.

Die Substrate werden künstlich bewässert durch ein übliches Tropfbewässerungssystem, bei dem Wasser mit einem Tropferschlauch längs einer Pflanzreihe ausgebracht wird.

Die künstliche Bewässerung wird so durchgeführt, daß kein Überschußwasser anfällt, so daß kein Wasser in für die Wurzeln der Pflanzenkulturen nicht erreichbare Bodenschichten versickert. Der Begriff "Überschußwasser" bezeichnet Wasser, das im Substrat versickert und von den Pflanzen nicht aufgenommen wird.

Es wurde erfindungsgemäß gefunden, daß bei einer Düngung derartig bewässerter Substrate mit einem stickstoffhaltigen Düngemittel das Pflanzenwachstum und der Ertrag deutlich verbessert werden können, wenn zusätzlich ein Nitrifikationsinhibitor auf das Substrat aufgebracht oder in das Substrat eingebracht wird. Da der Effekt des Nitrifikationsinhibitors nicht durch eine Reduktion von Stickstoffauswaschungsverlusten erklärt werden kann und gasförmige Stickstoffverluste für die Pflanzenernährung von untergeordneter Bedeutung sind, müssen die Nitrifikationsinhibitoren beim Einsatz in Fertigationssystemen eine zur Zeit nicht näher erklärbare wachstumsfördernde Eigenschaft aufweisen. Das Auffinden dieser wachstumsfördernden Eigenschaft bildet die Grundlage der vorliegenden Erfindung.

Die erfindungsgemäß behandelten Substrate können in einem beliebigen Anbau eingesetzt werden. Vorzugsweise werden sie zum Anbau in wasserarmen Regionen, die mit Tropfbewässerung bewässert werden, oder im geschützten Anbau unter Glas oder Folie eingesetzt. Der Ausdruck "unter Glas oder Folie" schließt dabei alle entsprechend wirksamen Systeme ein. Es kann sich um lichtdurchlässige Pflanzfolien oder um Gewächshäuser handeln, die aus Glas oder lichtdurchlässigem Kunststoffmaterial aufgebaut sein können. Weitere Ausführungsformen sind dem Fachmann bekannt.

Die Substrate können zum Anbau beliebiger Pflanzenkulturen eingesetzt werden. Vorzugsweise werden sie zum Anbau von Obst- oder Gemüsekulturen, beispielsweise Tomaten, eingesetzt.

Erfindungsgemäß wird 3,4-Dimethylpyrazolphosphat als Nitrifikationsinhibitor eingesetzt.

Allgemein sind Nitrifikationsinhibitoren chemische Verbindungen, die die Wirkung von im Boden vorhandenen nitrifizierenden Bakterien verlangsamen, so daß im Boden vorhandenes Ammonium nur langsam in Nitrationen umgewandelt wird.

3,4-Dimethylpyrazolphosphat ist in der DE-A 196 31 764 beschrieben. Beispielsweise kann 3,4-Dimethylpyrazol in einer konzentrierten Phosphorsäurelösung eingesetzt werden. Als Säure kann auch die sogenannte NP-Säure verwendet werden, die Phosphorsäure und Salpetersäure enthält und beim Aufschluß von Rohphosphaten mit Salpetersäure (ODDA-Prozeß) entsteht.

Der Nitrifikationsinhibitor wird in Kombination mit einem stickstoffhaltigen Düngemittel in Wasser gelöst eingesetzt.

Die Nitrifikationsinhibitoren werden erfindungsgemäß in Kombination mit stickstoffhaltigen Düngemitteln eingesetzt. Bezogen auf Nitrifikationsinhibitor und Düngemittel als Feststoff werden die Nitrifikationsinhibitoren vorzugsweise in einer Menge von 0,05 bis 5 Gew.-%, besonders bevorzugt 0,05 bis 1,0 Gew.-%, bezogen auf das Mineraldüngemittel, eingesetzt.

Als stickstoffhaltiges Düngemittel kann ein beliebiges geeignetes stickstoffhaltiges Düngemittel eingesetzt werden. Vorzugsweise enthält das stickstoffhaltige Düngemittel 5 bis 100% des Stickstoffs als Ammoniumstickstoff.

Erfindungsgemäß können alle bekannten ammonium- oder harnstoffhaltigen Mineraldüngemittel eingesetzt werden. Insbesondere zu nennen sind in diesem Zusammenhang die NPK-Dünger, d.h. Düngemittel, die Stickstoff, Phosphor und Kalium enthalten, Kalkammonsalpeter, d.h. Düngemittel, die noch Calcium enthalten, Ammonsulfatsalpeter (Allgemeine Formel (NH₄)₂SO₄ NH₄NO₃), Ammonphosphat und Ammonsulfat. Auch Harnstoff ist einsetzbar, die ammoniumhaltigen Düngemittel sind jedoch bevorzugt. Diese Düngemittel sind dem Fachmann allgemein bekannt, siehe auch beispielsweise Ullmann's Encyclopedia of Industrial Chemistry, 5. Edition, Vol. A 10, Seiten 323 bis 431, Verlagsgesellschaft, Weinheim, 1987. Die Düngemittel können auch noch weitere Nährstoffe enthalten, wie etwa Magnesium oder Spurennährstoffe. Bevorugte ammoniumhaltige Düngemittel sind NPK-Düngemittel, Kalkammonsalpeter, Ammonsulfatsalpeter, Ammoniumsulfat oder Ammoniumphosphat. Diese Düngemittel werden in flüssiger Form, gelöst in einem wässrigen Medium, eingesetzt. In diesem Fall kann auch verdünnter wässriger Ammoniak als Stickstoffdüngemittel eingesetzt werden.

Erfindungsgemäß eingesetzte Düngemittel können neben Harnstoff oder Stickstoff Kalium, Phosphor und/oder Magnesium in Form anorganischer Salze auch weitere Salze wie MAP, DAP, Kaliumsulfat, Kaliumchlorid, Magnesiumsulfat enthalten.

Ferner können neben den Hauptbestandteilen noch Sekundämährstoffe vorliegen. Beispielsweise können Sekundärnährstoffelemente ausgewählt sein aus Ca, S und B. Es können auch Spurenelemente, ausgewählt aus Fe, Mn, Cu, Zn, Mo oder Gemische davon in Form anorganischer Salze vorliegen. Geeignete Mengen für die sekundären Nährstoffe oder Spurenelemente sind Mengen von 0,5 bis 5 Gew.-%, bezogen auf das gesamte Düngemittel. Weitere mögliche Inhaltsstoffe sind Pflanzenschutzmittel, die Insektizide oder Fungizide, Wachstumsregulatoren oder Gemische davon.

Weitere mögliche Inhaltsstoffe für Düngemittel sind beispielsweise in Ullmann's Encyclopedia of Industrial Chemistry, 5. Auflage, 1987, Band A 10, Seiten 363 bis 401, DE-A 41 28 828, DE-A 19 05 834 und DE-A 196 31 764 beschrieben.

Besonders bevorzugt eingesetzte Düngemittel sind NP-, NK-, PK- sowie NPK-Düngemittel wie Kalkammonsalpeter, Ammonsulfat oder Ammonsulfatsalpeter. Nitrifikationsinhibitor und stickstoffhaltiges Düngemittel werden gemeinsam in Wasser gelöst auf die Substrate aufgebracht oder in die Substrate eingebracht.

Die erfindungsgemäße von Nitrifikationsinhibitoren in Kombination mit stickstoffhaltigen Düngemitteln kann grundsätzlich in allen Bereichen des Pflanzenbaus wie der Landwirtschaft und dem Gartenbau erfolgreich eingesetzt werden, besonders bevorzugt im Obst- und Gemüseanbau. Beispiele geeigneter Kulturen sind Zierpflanzen oder Verzehrskulturen wie Apfel, Birne, Erdbeere und Paprika. Die Erfindung erlaubt dabei eine besonders wirtschaftliche intensive Nutzung von landwirtschaftlich und gärtnerisch genutzten Flächen, wobei eine Belastung der Umwelt vermieden wird.

Die Aufbringung des Nitrifikationsinhibitors in Kombination mit stickstoffhaltigen Düngemitteln erfolgt im Zusammenhang mit der Bewässerung. Dabei kann der Zusatz bei jeder Bewässerung erfolgen, es ist aber auch möglich, den Zusatz gezielt zu einem oder mehreren Zeitpunkten während der Kulturperiode durchzuführen. Die Mengen an Nitrifikationsinhibitor und Düngemittel sowie an Bewässerung werden an die jeweiligen örtlichen Verhältnisse und an die Pflanzenkulturen angepaßt.

Die Erfindung wird nachstehend anhand von Beispielen näher erläutert.

### Beispiele

Eine übliche Tomatensorte wurde im Gewächshaus bzw. Folienhaus an drei Standorten in Limburgerhof (Deutschland), Benicarlo (Spanien) und Imola (Italien) angebaut. Es handelte sich um einen randomisierten Versuch mit vier Wiederholungen, tägliche Bewässerung mit wöchentlicher Fertigation, wobei ein wasserlösliches Nährsalz mit 14% Stickstoff, 8% Phosphat, 20% Kali und 2% Magnesium eingesetzt wurde. Dabei lagen 75% des enthaltenen Stickstoffs als Ammoniumstickstoff vor. Die Düngungshöhe erfolgte in Abhängigkeit von den jeweiligen Standorterfordernissen. Es wurden Versuche ohne Düngung, mit Düngung aber ohne Zusatz von 3,4-Dimethylpyrazolphosphat, sowie unter Zusatz unterschiedlicher Mengen von 3,4-Dimethylpyrazolphosphat durchgeführt.

### Beispiel 1

Limburgerhof, Düngung mit 250 kg/ha N, Periode März bis August. Der Marktertrag in dt/ha betrug:

| | |
|---|---|
| ohne Düngung und ohne DMPP-Zusatz: | 772 |
| mit Düngung, ohne DMPP-Zusatz: | 1169 |
| mit Düngung und 0,25% DMPP, bezogen auf NH₄-N: | 1216 |
| mit Düngung und 0,5% DMPP, bezogen auf NH₄-N: | 1260 |
| mit Düngung und 1,0% DMPP, bezogen auf NH₄-N: | 1272 |

### Beispiel 2

Imola, Düngung mit 220 kg/ha N, Periode Juni bis Oktober. Der Marktertrag in dt/ha betrug:

| | |
|---|---|
| ohne Düngung und ohne DMPP-Zusatz: | 0 |
| mit Düngung, ohne DMPP-Zusatz: | 638 |
| mit Düngung und 0,25% DMPP, bezogen auf NH₄-N: | 698 |
| mit Düngung und 0,5% DMPP, bezogen auf NH₄-N: | 711 |
| mit Düngung und 1,0% DMPP, bezogen auf NH₄-N: | 824 |

### Beispiel 3

Benicarlo, Düngung mit 300 kg/ha N, Periode Februar bis August. Der Marktertrag in dt/ha betrug:

| | |
|---|---|
| ohne Düngung und ohne DMPP-Zusatz: | 1595 |
| mit Düngung, ohne DMPP-Zusatz: | 1803 |
| mit Düngung und 0,25% DMPP, bezogen auf NH₄-N: | 1854 |
| mit Düngung und 0,5% DMPP, bezogen auf NH₄-N: | 1911 |

Aus den vorstehenden Versuchsergebnissen mit Fruchtgemüse wird deutlich, daß in allen drei geprüften Versuchen in Limburgerhof, Benicarlo und Imola eine Ertragsförderung durch den Zusatz von DMPP zur Nährlösung stattgefunden hat.

## Patentansprüche

1. Verwendung des Nitrifikationsinhibitors 3,4-Dimethylpyrazolphosphat in Kombination mit stickstoffhaltigen Düngemitteln, dem Bewässerungswasser zugegeben, in in Wasser gelöster Form zur Düngung von landwirtschaftlich oder gärtnerisch genutzten Substraten bei der Tropfbewässerung, bei der kein Überschusswasser anfällt, zur Verbesserung des Wachstums und Ertrags.

2. Verfahren zur Verbesserung des Wachstums und Ertrags bei der Düngung von landwirtschaftlich oder gärtnerisch genutzen Substraten zum Anbau von Obst- oder Gemüsekulturen im geschützten Anbau unter Glas oder Folie mit Tropfbewässerungssystemen, **dadurch gekennzeichnet, dass** bei der künstlichen Bewässerung ohne Anfall von Überschusswasser der Nitrifikationsinhibitor 3,4-Dimethylpyrazolphosphat mit stickstoffhaltigen Düngemitteln kombiniert dem Bewässerungswasser zugegeben wird und in in Wasser gelöster Form auf die Substrate aufgebracht oder eingebracht wird.

3. Verfahren nach Anspruch 2, **dadurch gekennzeichnet, dass** im stickstoffhaltigen Düngemittel 5 bis 100 % des Stickstoffs als Ammoniumstickstoff vorliegen.

## Claims

1. Use of the nitrification inhibitor 3,4-dimethylpyrazole phosphate in combination with nitrogenous fertilizers, added to the irrigation water, in water-dissolved form for fertilizing agriculturally or horticulturally utilized substrates in trickle irrigation, where no surplus water is generated, for improving growth and yield.

2. Method of improving growth and yield in the fertilization of agriculturally or horticulturally utilized substrates for the production of fruit or vegetable crops in protected cultivation under glass or film with trickle irrigation systems, **characterized in that**, in the artificial irrigation without the generation of surplus water the nitrification inhibitor 3,4-dimethylpyrazole phosphate, in combination with nitrogenous fertilizers, is added to the irrigation water and applied or introduced in water-dissolved form to/into the substrates.

3. Method according to Claim 2, **characterized in that** 5 to 100% of the nitrogen in the nitrogenous fertilizer are present as ammonium nitrogen.

## Revendications

1. Utilisation de l'inhibiteur de nitrification 3,4-diméthylpyrazole phosphate, en combinaison avec des engrais contenant de l'azote, ajouté à l'eau d'irrigation, sous forme dissoute dans l'eau pour la fertilisation de substrats utilisés en agriculture ou en horticulture lors de l'irrigation par goutte à goutte sans production d'eau en excès, pour améliorer la croissance et le rendement.

2. Procédé pour améliorer la croissance et le rendement lors de la fertilisation de substrats utilisés en agriculture ou en horticulture pour la création de cultures de fruits ou de légumes dans la culture protégée sous verre ou sous feuille présentant des systèmes d'irrigation par goutte à goutte, **caractérisé en ce que** lors de l'irrigation artificielle, sans production d'eau en excès, l'inhibiteur de nitrification 3,4-diméthylpyrazole phosphate, combiné à des engrais contenant de l'azote, est ajouté à l'eau d'irrigation et appliqué sur ou introduit dans les substrats sous forme dissoute dans l'eau.

3. Procédé selon la revendication 2, **caractérisé en ce que** 5 à 100% de l'azote dans l'engrais contenant de l'azote se trouvent sous forme d'azote d'ammonium.
